# EUROPÄISCHE PATENTSCHRIFT

(11) **EP 0 383 878 B1**
(45) Veröffentlichungstag und Bekanntmachung des Hinweises auf die Patenterteilung: **30.11.1994**
(21) Anmeldenummer: 89908982.5
(22) Anmeldetag: 03.08.1989
(51) Int. Cl.: B01D 21/06, B01D 21/24

(54) **VORRICHTUNG ZUM RÄUMEN VON BODENSCHLAMM UND/ODER SCHWIMMSCHLAMM AUS RUNDKLÄRBECKEN**
DEVICE FOR REMOVING BOTTOM SLUDGE AND/OR FLOATING SLUDGE FROM CIRCULAR SETTLING BASINS
DISPOSITIF POUR ELIMINER DES BOUES DE FOND ET/OU DES BOUES FLOTTANTES CONTENUES DANS DES BASSINS DE DECANTATION CIRCULAIRES

(30) Priorität: 17.08.1988 DE 3827914; 13.10.1988 DE 3834891
(43) Veröffentlichungstag der Anmeldung: 29.08.1990
(73) Patentinhaber: Glaser, Bernd, D-22459 Hamburg (DE)
(72) Erfinder: GLASER, Bernd, D-2000 Hamburg 61 (DE); KLOTH, Uwe, D-2406 Stockelsdorf (DE)
(74) Vertreter: Patentanwälte Hauck, Graalfs, Wehnert, Döring, Siemons
(86) Internationale Anmeldenummer: EP8900919
(87) Internationale Veröffentlichungsnummer: WO9001982

(56) Entgegenhaltungen:
- GB-A- 496 236
- GB-A- 847 337
- US-A- 1 947 429
- US-A- 2 073 810
- US-A- 2 233 641
- US-A- 2 980 934
- US-A- 3 371 788

## Beschreibung

Die Erfindung bezieht sich auf eine Vorrichtung nach dem Oberbegriff des Patentanspruchs 1.

Feststoffteilchen, deren spezifisches Gewicht größer als das von Wasser ist, sammeln sich als Bodenschlamm auf dem Boden eines Klärbeckens. Feststoffteilchen mit einem spezifischen Gewicht kleiner als 1 sammeln sich an der Oberfläche des Klärwassers und bilden den sogenannten Schwimmschlamm. Bodenschlamm und Schwimmschlamm müssen kontinuierlich oder in Abständen abgeräumt werden. Hierfür sind verschiedene konstruktive Ausführungsformen bekannt. Nachstehend werden nur solche für Rundklärbecken erläutert.

Bei einem Saugräumer werden z.B. Saugmundstücke, Schilde und Rohre vorgesehen, die nahe dem Boden des Beckens geführt sind. Der Schlamm wird nach dem Saugheberprinzip über ein Rohr in eine Rinne oder in das Mittelbauwerk gefördert. Eine derartige Konstruktion ist etwa aus "Untersuchungen zur Verbesserung des Feststoffrückhalts an einem längsdurchströmten Nachklärbecken", S. Schlegel, M. Führer, Essen aus "Korrespondenz Abwasser" 32. Jahrgang, Heft 3, 1985, Seite 162 bis 166 bekanntgeworden.

Aus der DE-A-27 40 645 ist eine Schwimmschlammräumvorrichtung bekanntgeworden, bei der eine in einem Auffangbehälter führende Räumrinne an der umlaufenden Räumerbrücke angebracht ist. Eine Pumpe fördert den Schwimmschlamm zu einer das Mittelbauwerk umgebenden Ablaufrinne. Der Vorteil dieses Räumprinzips liegt darin, daß unabhängig von der Windrichtung Schwimmschlamm abgeräumt werden kann. Nachteilig ist hingegen die Anordnung der Pumpe auf der Räumerbrücke. Da die elektrische Versorgung der Pumpe nur über einen stationären Anschluß von außen oder innen erfolgen kann, müssen Schleifkontakte (Schleifring oder dergleichen) verwendet werden, die bekanntlich Verschleißteile sind und wegen ihrer Korrosionsempfindlichkeit auch ständig überwacht werden müssen. Bei Verwendung eines sogenannten Zentralantriebs sitzt der Antrieb stationär auf einer Decke oder einer das Becken überspannenden stationären Brücke und treibt über eine Drehwelle den Räumermechanismus an, beispielsweise auch die Schilde zur Bodenschlammräumung. Für Rundklärbecken mit Zentralantrieb ist auch bekanntgeworden, mit der Drehwelle ein Räumschild umlaufen zu lassen, das mit einem stationären Ablauf im Becken zusammenwirkt. Der Räumschild für den Schwimmschlamm hat einen höhenbeweglichen Teil, der sich im Bereich des Schwimmschlammablaufs entlang einer rampenartigen Fläche aufwärts bzw. abwärt bewegt, um den Schwimmschlamm in die trichterartige Ablauföffnung zu schieben. Ein stationärer Schwimmschlammablauf hat den Nachteil, daß bei ungünstiger Windrichtung eine Schwimmschlammräumung gar nicht vorgenommen werden kann.

Aus der US-A-2 233 641 ist ein Rundklärbecken mit in Etagen übereinander angeordneten Kammern bekannt. In sämtlichen Kammern befinden sich Schildräumer, die auf einer über die mehreren Etagen geführten Antriebswelle sitzen. An jeder Wellendurchführung sind die Kammern gegeneinander durch einen bodenfesten Topf und einen wellenfesten Deckel mit zwischenliegendem Luftpolster gegeneinander abgedichtet. Der Bodenschlamm wird neben der Abdichtung mittels einer Leitung abgezogen.

Aus der US-A-1 947 429 ist ein Saugräumer der eingangs genannten Art bekannt. Bei dieser Konstruktion gelangt der abgesaugte Bodenschlamm durch eine Drehgelenkverbindung in eine zum Boden des Klärbeckens geführte Schlammrücklaufleitung. Diese Unterwasser-Drehverbindung mit aufeinandergleitenden Teilen ist problematisch.

Davon ausgehend liegt der Erfindung die Aufgabe zugrunde, eine Räumvorrichtung der eingangs genannten Art mit einer verbesserten flüssigkeitsleitenden Drehverbindung zwischen dem mindestens einen Rohr an der Tragkonstruktion und der Schlammrücklaufleitung zur Verfügung zu stellen.

Diese Aufgabe wird durch die Merkmale des Patentanspruchs 1 gelöst.

Bei dem erfindungsgemäßen Räumer ist eine umlaufende Tragkonstruktion vorgesehen, die vorzugsweise an einer vertikalen, mit der Antriebsvorrichtung gekoppelten Drehwelle aufgehängt ist. Die Drehwelle ist ihrerseits in einer starren, das Klärbecken diametral überspannenden Brücke aufgehängt. Alternativ wird eine umlaufende Brückenkonstruktion verwendet, die z.B. zentral drehbar gelagert und auf dem Beckenrand abgestützt ist.

Der beschriebene konstruktive Aufbau des erfindungsgemäßen Räumers zeichnet sich durch einen sehr geringen Aufwand aus.

Als Drehverbindung ist im Klärbecken mittig ein nach oben offener Topf angeordnet, in den hinein sich das Ende des Heberrohrs erstreckt, über den Topf ein becherförmiger Deckel gestülpt, das Rohr durch die Decke des Deckels hindurchgeführt und mit diesem dicht und fest so verbunden, daß der Deckel den Topf im wesentlichen nicht berührt und daß im Raum zwischen Deckel und Topf ein Luftpolster angeordnet ist. Die beschriebene Drehverbindung ist absolut verschleißfrei. Das Luftpolster zwischen Topf und Deckel verhindert ein Mitsaugen von Falschwasser und Unterbrechung der Förderung. Anstelle von Luft kann naturgemäß ein anderes Gas verwendet werden. Der maximale Druck ist dabei von den hydraulischen Verhältnissen abhängig. Da die beschriebene Drehverbindung sich innerhalb des Klärbeckens, vorzugsweise an dessen Boden befindet, drückt die oberhalb der Drehverbindung befindliche Wassersäule auf den Spalt zwischen Deckelrand und Topfwandung.

Dient das Rohr der Bodenschlammräumung nach dem Saugprinzip, ist es zur Einleitung und Aufrechterhaltung des Saugprinzips erforderlich, die Saugrohre zu entlüften. Diese kann durch eine am höchsten Punkt des Saugrohrs angeordnete Entlüftungsbohrung oder ein Entlüftungsventil am höchsten Punkt des Saugrohrs erfolgen.

Es kann wünschenswert sein, am Saugrohr ein Drosselorgan anzuordnen, das über ein nach oben geführtes Betätigungselement, beispielsweise eine Stange oder dergleichen betätigbar ist.

Es ist bekannt, das zu klärende Wasser über eine entsprechende Zuführleitung so in das Becken einzuführen, daß es zentral austritt, vorzugsweise auf halber Niveauhöhe im Klärbecken. Dies kann bei der beschriebenen Konstruktion in der Weise geschehen, daß eine Zuführleitung über eine das Becken überspannende Brücke zugeführt oder durch die Beckenwand hindurchgeführt ist. In vielen Fällen ist jedoch erwünscht, die Zufuhr von Wasser von unten über den Beckenboden zu bewerkstelligen. Hierbei muß jedoch vermieden werden, daß sich auf den Beckenboden absetzender Schlamm mit dem zugeführten Wasser vermischt.

Bei dem erfindungsgemäßen Saugräumer wird ein mittiges aufrechtes Wasserzuführrohr von dem Ringraum umgeben, der im oben beschriebenen Topf ausgebildet ist, um eine durch den Beckenboden hindurchgeführte Wasserzuführleitung mit dem Ringraum zu verbinden.

Für die Ausbildung der Topf- und Deckelkonstruktion und des Wasserzuführrohrs sind verschiedene Ausführungsformen denkbar. Eine besteht erfindungsgemäß darin, daß ein ringförmiger Topf auf dem Beckenboden angeordnet ist, über den ein ringförmiger Deckel gestülpt ist. Das Wasserzuführrohr kann getrennt durch den ringförmigen Deckel hindurch in den durch den ringförmigen Topf gebildeten Innenraum geführt sein; es kann jedoch auch mit dem Deckel verbunden sein, so daß es sich bei der Drehung des Saugräumers mitdreht. Für den letzteren Fall kann das Wasserzuführrohr zugleich den radial innen liegenden Deckelrand des ringförmigen Deckels bilden. Falls das gemeinsame Luftpolster für Schlammabzüge und Rohrwasserzufuhr getrennt werden soll, kann von der Decke des Deckels eine kreisförmige Wand herunter in den ringförmigen Topf hineinhängen, die einen geringen radialen Abstand zur Innenwandung des Topfes aufweist.

Die zuletzt beschriebene Konstruktion hat überdies den Vorteil, daß eine Abstützung der Brücken- oder Deckenkonstruktion, welche das Klärbecken überspannt, vorgesehen werden kann. Die Drehwelle, die die Tragkonstruktion für die Saugrohre hält, ist ihrerseits in einer Decke oder einer das Becken überspannenden Brücke drehbar gelagert. Bei sehr großen Rundbecken, zum Beispiel mit Durchmessern von 40 m und mehr, muß die Brücke eine erhebliche statische Festigkeit aufweisen, um begehbar zu sein und die gewünschte Lagerung aufnehmen zu können. In einer Ausgestaltung der Erfindung ist hierzu vorgesehen, daß an der Brücken- oder Deckenkonstruktion eine vertikal nach unten weisende Stütze angebracht ist, die sich durch die hohle Drehwelle hindurch bis zum Wasserzuführrohr oder in dieses hineinerstreckt und sich radial am Zuführrohr, der Zuführleitung oder in der Bodenöffnung abstützt. Die Abstützung kann unmittelbar an der Brücke erfolgen oder mittels einer Lagerplatte und eines Rollenlagers an einer Zahnscheibe, die ihrerseits drehfest mit der Drehwelle verbunden ist, die in der Brücken- oder Deckenkonstruktion drehbar gelagert ist. Mit Hilfe einer derartigen Abstützung lassen sich stabile Brücken- oder Deckenkonstruktionen erstellen, die gleichwohl relativ leicht gebaut sein können. Es ist sogar möglich, lediglich eine radiale oder "halbe Brücke" zu verwenden, die am radial inneren Ende über die erwähnte Stütze statisch abgestützt ist. Damit eine derartige halbe Brücke auch zur Seite hin ausreichend stabil ist, kann sie zum Beispiel mit Hilfe von Seilen am Beckenrand verspannt sein.

Die Erfindung wird nachfolgend anhand von Ausführungsbeispielen näher erläutert.
- Fig. 1: zeigt schematisch einen Saugräumer nach der Erfindung.
- Fig. 2: zeigt eine Einzelheit des Saugräumers nach Fig. 1.
- Fig. 3: zeigt eine weitere Einzelheit des Saugräumers nach Fig. 1, die Drehverbindung betreffend.
- Fig. 4: zeigt schematisch eine abgewandelte Drehverbindung nach der Erfindung für den Saugräumer nach Fig. 1.
- Fig. 5: zeigt eine weitere Ausführungsform einer Drehverbindung.
- Fig. 6: zeigt eine weitere Ausführungsform der Drehverbindung.
- Fig. 7: zeigt eine weitere Ausführungsform einer Drehverbindung.
- Fig. 8: zeigt eine ähnliche Drehverbindung wie Fig. 7 mit einer axialen Abstützung einer Brückenkonstruktion.
- Fig. 9: zeigt eine Kombination einer Wasserzuführung mit einer Räumerbrücke nach der Erfindung.

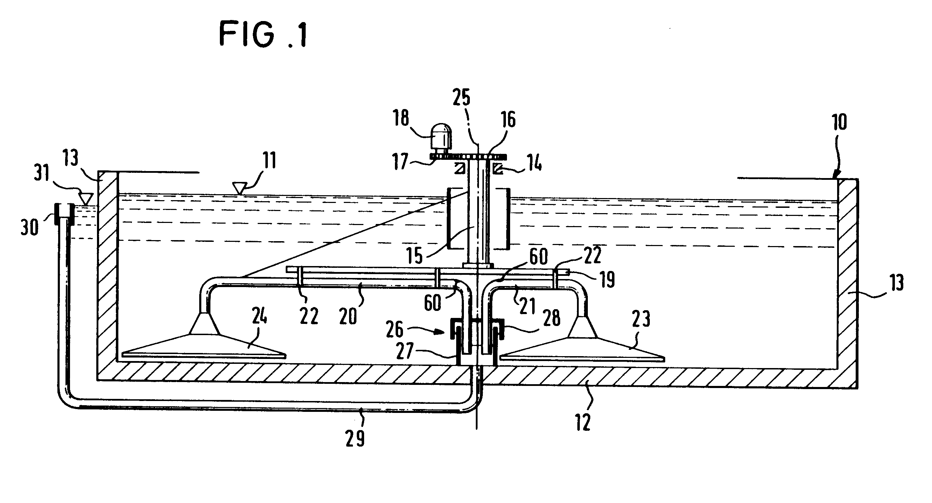

Fig. 1 zeigt ein Rundklärbecken 10, das mit Wasser bis zu einem Niveau 11 gefüllt ist. Das Klärbecken 10 besteht aus einer ebenen Bodenplatte 12 und einer Wand 13. In einem nur schematisch abgedeuteten Lager 14 ist eine Drehwelle 15 um eine vertikale Achse, die mit der Mittenachse des Beckens 10 übereinstimmt, drehbar gelagert. Am oberen Ende der Welle sitzt ein Zahnrad 16, das mit einem Ritzel 17 kämmt, das seinerseits von einem Elektromotor 18 angetrieben ist. Am unteren Ende der Welle ist unterhalb des Wasserspiegels eine Traverse 19 angebracht, die diametral parallel zur Bodenplatte 12 verläuft. Sie dient zur Befestigung von zwei umgekehrt U-förmigen Saugrohren 20, 21, deren Stege durch nicht näher bezeichnete Befestigungsmittel 22 mit der Traverse 19 verbunden sind. Längliche Saugmundstücke 23 bzw. 24 sind an einem Ende der Heberrohre 20 angebracht; sie erstrecken sich kurz oberhalb der Innenfläche der Bodenplatte 12, wobei das Mundstück 24 den äußeren und das Mundstück 23 den inneren Ringbereich bestreicht, wenn die Welle 15 in Drehung versetzt wird. Die Heberrohre 20, 21 bzw. ihre Mundstücke 23, 24 liegen mithin auf diametral gegenüberliegenden Seiten der Drehachse, die mit 25 bezeichnet ist; sie sind jedoch radial versetzt wegen der beschriebenen versetzten Zuordnung zu Ringbereichen des Klärbeckens.

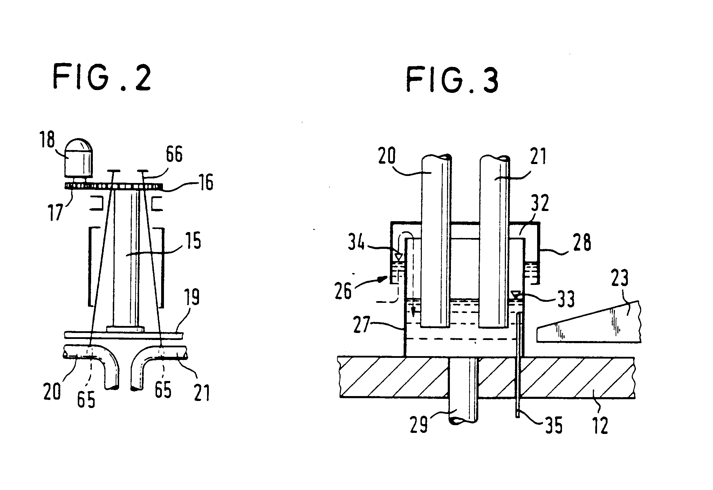

Auf der Bodenplatte 12 des Beckens 10 ist eine Drehverbindung 26 angeordnet. Sie besteht aus einem nach oben offenen Topf 27 und einem becherförmigen Deckel 28, der von oben über den Topf 27 mit Abstand zu diesem gestülpt ist (siehe auch Fig. 3). Die einander benachbarten Schenkel der U-förmigen Heberrohre 20, 21 sind durch den Deckenteil des Deckels 28 dichtend hindurchgeführt und an diesem befestigt. Sie ragen in den vom Topf 27 und dem Deckel 28 gebildeten Raum hinein und tauchen in das Medium ein, das sich bis zu einer gewissen Höhe im Topf 27 befindet.

Eine Dükerleitung 29, die als Schlammrücklaufleitung dient, ist unterhalb der Bodenplatte 12 geführt und erstreckt sich durch die Platte 12 hindurch in den Topf 27 von unten hinein. Das andere Ende ist neben der Beckenwand 13 nach oben geführt und endet zum Beispiel in einem nicht gezeigten Pumpenrumpf. Das obere Ende wirkt teleskopisch mit einem Rohrstück 30 zusammen, das in seiner Höhe verstellbar ist. Liegt dieses Niveau, das mit 31 bezeichnet ist, unterhalb des Niveaus 11, kann eine Schlammrückführung nach dem Prinzip der kommunizierenden Röhren stattfinden. Zusätzlich kann auch eine Schlammpumpe in der Leitung 29 angeordnet werden.

Wie aus Fig. 3 hervorgeht, ist im oberen Bereich des Raums zwischen Topf 27 und Deckel 28 ein Gaspolster 32 vorgesehen. Es trennt das fließfähige Medium im Topf 27 von dem Wasser im Klärbecken 10. Das Niveau des Mediums im Topf 27 ist bei 33 gezeigt. Das Niveau des Wassers zwischen Deckel 28 und Topf 27 ist mit 34 bezeichnet. Es wird mithin verhindert, daß Wasser aus dem Becken entlang der strichpunktierten Linie in das Innere des Topfes 27 gelangt. Von unten durch die Bodenplatte 12 hindurch ist eine Gasleitung 35 in den Topf 27 hineingeführt. Über die Leitung 35 kann Gas, zum Beispiel Luft, nachgefüllt werden, sollte es während der Zeit über eine Undichtigkeit langsam entweichen. Eine Gaszufuhr kann indessen auch über die Dükerleitung 29 stattfinden.

Aufgrund der Tatsache, daß das Niveau 31 unterhalb des Niveaus 11 im Klarbecken 10 liegt, wird über die Düsen 23, 24 Schlamm vom Boden des Klärbeckens abgesaugt und in den Topf 27 gefördert. Aus diesem wird dann über die Dükerleitung 29 der Schlamm abgefördert. Die unterschiedlichen Niveauhöhen 33 und 34 sind dabei lediglich ein Maß für die Strömungsverluste des Schlamms in den Heberleitungen 20, 21.

Es ist denkbar, daß aufgrund von Undichtigkeiten das Gaspolster 32 nicht ausreicht, den Eintritt von Wasser in den Topf 27 zu verhindern. Es könnte daran gedacht werden, das Vorhandensein des Gaspolsters durch einen Sensor zu überprüfen. Dies ist jedoch an sich nicht notwendig, da der Klärwärter aufgrund der dann dünnflüssigen Konsistenz des Schlamms sofort erkennt, daß Wasser aus dem Becken mit ausgetragen wird.

Wie zu erkennen, ist die Drehverbindung 26 völlig verschleißfrei. Sie kann eine sehr lange Zeit in Betrieb bleiben, ohne daß eine Wartung notwendig wäre.

Wie in Fig. 1 nur angedeutet, sind im oberen Bereich der Saugrohre 20, 21 jeweils kleine Löcher 60 geformt, die zur Entlüftung der Heberrohre 20, 21 dienen. Eine Entlüftung ist zur Aufrechterhaltung des Saugprinzips notwendig. Sie kann auch mittels Entlüftungsventilen erfolgen.

Fig. 2 zeigt wie Fig. 1 die Heberrohre 20, 21 in ihrem angrenzenden Bereich. Man erkennt, daß eine Drosselklappe 65 oder dergleichen vorgesehen ist zur Veränderung des Rohrquerschnitts. Die Drosselklappe 65 ist über eine Betätigungsstange 66, die sich durch das Zahnrad 16 hindurcherstreckt, betätigbar. Mit Hilfe der Drosselklappen 65 kann die abzusaugende Schlammenge geregelt werden. Statt einer drehbaren Klappe kann auch ein anderes Drosselorgan, z.B. eine vertikal verstellbare Schieberplatte vorgesehen werden.

Es versteht sich, daß die Traverse 19 auch durch eine Seilaufhängung oder dergleichen ersetzt werden kann.

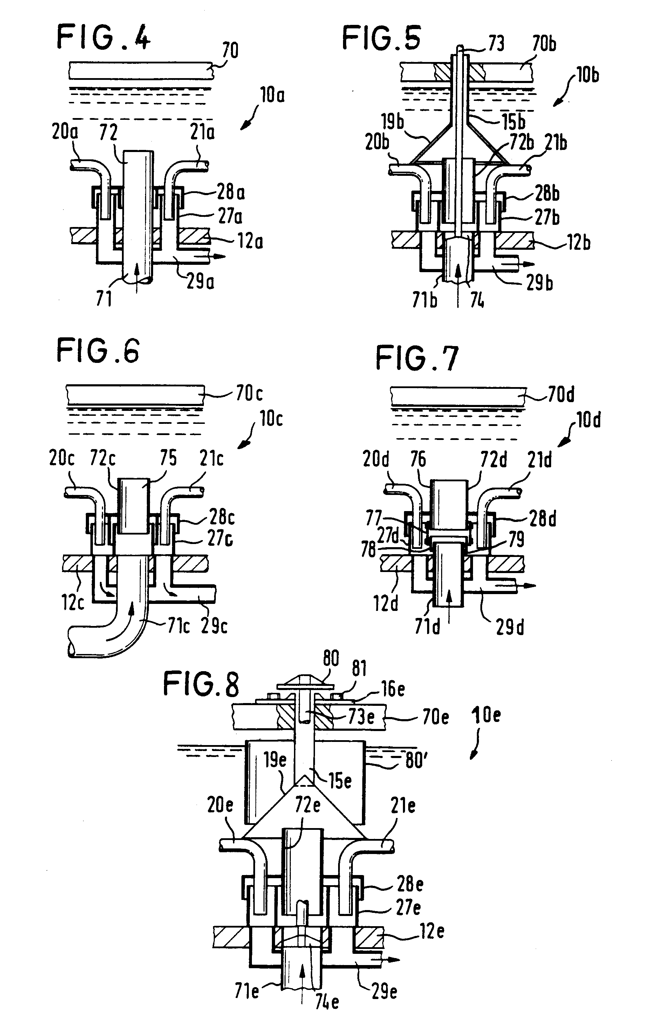

Bei den Darstellungen nach den Figuren 4 bis 9 werden solche Teile, die mit denen nach Fig. 1 gleich sind, mit gleichen Bezugszeichen versehen, denen ein Index zugefügt ist.

Von dem Klärbecken 10a nach Fig. 4 ist lediglich die Bodenplatte 12a und eine Brücke 70 angedeutet, welche das Becken 10a diametral überspannt. Man erkennt, daß durch eine mittige Öffnung in der Bodenplatte 12a eine Wasserzuführleitung 71 eingeführt ist, die mit einem axialen aufrechten Wasserzuführrohr 72 verbunden ist. Das obere Ende des Wasserzuführrohrs liegt etwa auf der halben Pegelhöhe des Wassers im Becken 10a. Auf der Bodenplatte 12a ist ein nach oben offener ringförmiger Topf 27a aufgesetzt, über den ein ringförmiger Deckel 28a gestülpt ist. Durch die Decke des ringförmigen Deckels 28a hindurch erstrecken sich, wie in Fig. 1 gezeigt, die Enden der Saugrohre 20a bzw. 21a. Sie sind dicht und fest mit dem Deckel 28a verbunden. Die Tragkonstruktion für die Saugrohre 20a, 21a kann der nach Fig. 1 entsprechen. Die Drehwelle ist in Fig. 4 nicht dargestellt. In Fig. 4 sind an zwei diametral gegenüberliegenden Stellen Öffnungen in der Bodenplatte 12a vorgesehen, durch die hindurch sich Enden der Schlammrückführleitung 29a erstrecken. Im Bereich der Zuführleitung 71 ist die Schlammrückführleitung 29a um die Zuführleitung herum gebogen. In dem Raum zwischen Deckel 28a und Topf 27a befindet sich ebenfalls ein Luftpolster, wie in Verbindung mit Fig. 1 beschrieben.

Bei der Ausführungsform nach Fig. 5 ist ebenfalls ein nach oben offener ringförmiger Topf 27b auf der Bodenplatte 12b aufgestellt, auf den ein ringförmiger Deckel 28b, den Topf 27b überstülpend, aufgesetzt ist, jedoch ohne unmittelbaren Kontakt, wie in Verbindung mit Fig. 1 bereits beschrieben. Während bei der Ausführungsorm nach Fig. 4 das Zuführrohr 72 getrennt von Topf und Deckel nach oben in das Becken 10a geführt ist, ist im Fall von Fig. 5 das Zuführrohr 72b mit dem Deckel 28b verbunden und dichtend durch dessen Decke hindurchgeführt, wobei das untere Ende des Zuführrohrs 72b den inneren Rand des ringförmigen Deckels 28b bildet. Bei der Ausführungsform nach Fig. 5 ist die Drehwelle 15b zu erkennen, die hohl ausgeführt ist und an der die Tragkonstruktion 19b hängt. Die Tragkonstruktion 19b hält die Saugrohre 20b, 21b sowie den Deckel 28b über das Wasserzuführrohr 72b. Durch die hohle Drehwelle 15b hindurch sowie durch das Zuführrohr 72b ist eine vertikale Stütze 73 geführt, die am oberen Ende zum Beispiel über eine nicht gezeigte Verbindung mit der Brückenkonstruktion 70b verbunden ist. Am unteren Ende weist sie radiale Stützelemente 74 auf, die sich in der Öffnung der Bodenplatte 12b für die Wasserzuführleitung 71b abstützen. Mit Hilfe der Stütze 73 kann daher die Brücke 70b vertikal abgestützt werden. Die drehbare Lagerung der Drehwelle 15b sowie der Antrieb dafür ist weder in Fig. 4 noch in Fig. 5 dargestellt.

Die Konstruktion nach Fig. 6 gleicht weitgehend der nach Fig. 5 mit dem Unterschied, daß von der Decke des Deckels 28c eine ringförmige Wand 75 nach unten hängt in geringem radialem Abstand zur radial inneren Wandung des ringförmigen Topfes 27c. Sie soll für einen verbesserten und getrennten Einschluß der Luftpolster im Raum zwischen Topf 27c und Deckel 28c einerseits und Deckel 28c und Wand 75 andererseits sorgen.

Die Konstruktion nach Fig. 7 gleicht wiederum weitgehend der nach Fig. 5, jedoch mit dem Unterschied, daß ein etwas abgewandeltes Wasserzuführrohr 72d im Becken 10d angeordnet ist. Das Zuführrohr 72d besteht aus einem oberen mit dem Deckel 28d verbundenen Abschnitt 76, an dessen unterem Ende mit Hilfe einer Schelle oder dergleichen eine flexible Manschette 77 angebracht ist, die ihrerseits am anderen Ende mit einem Rohrstück 78 verbunden ist, das sich teleskopisch über einen Rohrstutzen 79 erstreckt, der in Verlängerung der Zuführleitung 71d von der Bodenplatte 12d etwas nach oben ragt. Der Rohrstutzen 79 ist naturgemäß stationär, während der Abschnitt 76 sich mit der Drehwelle umdreht. Somit ist eine Drehverbindung im Rahmen der Zuführleitung geschaffen.

Die Ausführungsform nach Fig. 8 gleicht wiederum weitgehend der nach Fig. 5, jedoch mit dem Unterschied, daß die Stütze 73e in besonderer Weise an der Brücke 70e abgestützt ist. Zu diesem Zweck ist mit dem oberen Ende der Stütze 73e eine Stützplatte 80 verbunden. Mit der Hohlwelle 15e ist am oberen Ende die Zahnscheibe 16e (siehe Fig. 1) drehfest verbunden (Lagerung von Zahnscheibe 16e und Welle 15e an der Brückenkonstruktion 70e sind nicht dargestellt). Auf der Scheibe 16e ist ein ringförmiges Rollenlager 81 angeordnet, wobei dessen äußerer Laufring fest mit der Scheibe 16e verbunden ist. Die Stützplatte 80 ist mit dem inneren Laufring des Rollenlagers 81 verbunden. Die Stütze 73e, die sich über die radialen Stützelemente 74e in der Öffnung der Bodenplatte 12e abstützt, stützt im oberen Ende über die Stützplatte 80 die drehende Zahnscheibe 16e ab (zieht die Scheibe 16e über Zuganker oder dergleichen). Soll eine Abstützung der Brückenkonstruktion 70e unmittelbar an der Stütze 73e stattfinden, ist die Stützte 73e weiter nach oben zu ziehen, damit durch entsprechende Streben oder eine geeignete den Wellenantrieb überbrückende Hilfskonstruktion eine Verbindung mit der Brückenkonstruktion 70e hergestellt werden kann.

Ein Zylinderrohr 80' größeren Durchmessers ist mit der Tragkonstruktion 19e bzw. der hohlen Drehwelle 15e verbunden. Es dreht sich mit der Hohlwelle 15e folglich um. Am unteren Ende besteht ausreichend Platz, daß das über das Zuführrohr 72e zugeführte Wasser in das Becken 10e austreten kann. Am oberen Ende steht der Zylinder 80' etwas über das Niveau des Wassers über und dient mithin als Begrenzung für den Schwimmschlamm, der mithin innerhalb des Zylinders auf bekannte Weise entnommen werden kann. An der Außenseite des Zylinders 80' können ein oder mehrere Flügel angebracht werden, um das Wasser in Bewegung zu setzen.

Wenn vorstehend von Rohr, Rohrabschnitt, Leitung oder Leitungsabschnitt gesprochen ist, so ist stets das gleiche gemeint. Eine Einschränkung der Erfindung wird dadurch nicht vorgenommen.

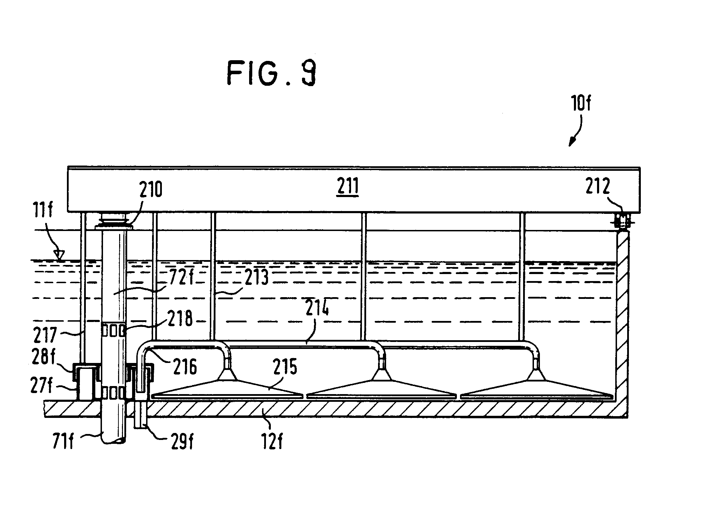

In Fig. 9 ist das Wasserzuführrohr 72f im Becken 10f über das Niveau 11f nach oben verlängert. Am freien Ende weist es ein Kugeldrehlager 210 auf zur drehbaren Abstützung einer "halben" Räumerbrücke 211, die sich am anderen Ende bei 212 rollend auf dem Beckenrand abstützt. Über Stäbe 213 sind an der Räumerbrücke 211 Saugrohre 214 angehängt, an denen Saugmundstücke 215 angebracht sind (siehe auch Fig. 1). Die Saugrohre 214 sind bei 216 vereint. Das vereinte Rohr 216 erstreckt sich durch den ringförmigen Deckel 28f in den ringförmigen Topf 27f hinein (siehe hierzu Figuren 4 bis 8). Mit Hilfe eines weiteren Stabes 217 ist der Deckel 28f zusätzlich an der Räumerbrücke 211 angebracht. Während der Drehung der Räumerbrücke 211 bewegen sich die Mundstücke 215 über den Boden des Beckens und saugen den Schlamm auf, der in den Topf 27f eingetragen wird und über die Schlammablaufleitung 29f weggefördert wird. Die Wasserzufuhr vom Wasserrohr 72f in das Becken 10f hinein erfolgt über seitliche Durchbrüche 218 im Wasserzuführrohr 72f. Es versteht sich, daß das Rohr 72f oberhalb der Durchbrüche 218 auch massiv ausgeführt sein kann. Die Stromzuführung kann über die als Mittensäule ausgeführte Wasserzuführung 72f erfolgen, wobei im Bereich des Drehlagers 210 eine Schleifringanordnung erforderlich ist.

## Patentansprüche

1. Vorrichtung zum Räumen von Bodenschlamm und/oder Schwimmschlamm aus einem Rundklärbecken (10), mit einer um eine zentrale vertikale Achse gelagerten Tragkonstruktion (19), die mit Hilfe eines Antriebs (18) in Drehung versetzt wird, mit einer Schlammrücklaufleitung (29), die unterhalb des Klärbeckens verläuft und im mittleren Bereich in das Klärbecken hineingeführt ist und den Schlamm nach außerhalb des Klärbeckens leitet und mit der Tragkonstruktion verbundenen Räummitteln (23, 24), die mindestens ein an der Tragkonstruktion angebrachtes Rohr (20, 21) oder dergleichen aufweisen, in das die Räummittel den Schlamm eintragen und das Rohr unterhalb des Wasserspiegels (11) des Klärbeckens mit der Rücklaufleitung über eine Relativdrehung zulassende Drehverbindung (27, 28) verbunden ist, um den Schlamm zum Eintrittsende der Schlammrücklaufleitung (29) zu führen, dadurch gekennzeichnet, daß im Klärbecken (10) mittig ein nach oben offener Topf (27) angeordnet ist, in den hinein sich das Ende des Rohrs (20, 21) erstreckt, über den Topf (27) ein becherförmiger Deckel (28) gestülpt ist, das Rohrende durch die Decke des Deckels (28) hindurchgeführt und mit diesem dicht und fest so verbunden ist, daß der Deckel (28) den Topf (27) im wesentlichen nicht berührt und daß im Raum zwischen Deckel (28) und Topf (27) ein Luftpolster (32) angeordnet ist.

2. Vorrichtung nach Anspruch 1, dadurch gekennzeichnet, daß eine getrennte Luftzuführleitung (35) in den Topf (27) hineingeführt ist, vorzugsweise über den Boden des Klärbeckens (10).

3. Vorrichtung nach Anspruch 1 oder 2, dadurch gekennzeichnet, daß der Topf (27a, 27b, 27c, 27d, 27e), der auf dem Beckenboden (12a, 12b, 12c, 12d, 12e) angeordnet ist, und der Deckel (28a, 28b, 28c, 28d, 28e) ringförmig ausgebildet sind, wodurch ein ein Luftpolster einschließender ringförmiger Raum gebildet ist, der ein mittiges aufrechtes Wasserzuführrohr (72, 72b, 72c, 72d, 72e) umgibt, das durch den Beckenboden (12a, 12b, 12c, 12d, 12e) hindurch mit der Wasserzuführleitung (71, 71b, 71c, 71d, 71e) verbunden ist.

4. Vorrichtung nach Anspruch 3, dadurch gekennzeichnet, daß das Wasserzuführrohr (72) getrennt vom ringförmigen Deckel (28a) durch diesen hindurchgeführt ist.

5. Vorrichtung nach Anspruch 3, dadurch gekennzeichnet, daß das Wasserzuführrohr (72b, 72c, 72d, 72e) mit dem Deckel (28b, 28c, 28d, 28e) verbunden ist, jedoch zur Innenseite der Innenwandung des ringförmigen Topfes (27b, 27c, 27d, 27e) einen radialen Abstand hat.

6. Vorrichtung nach einem der Ansprüche 1 bis 5, dadurch gekennzeichnet, daß das Saugrohr (20, 21) eine Entlüftung (60) aufweist, vorzugsweise an einem höchsten Punkt des Saugrohrs (20, 21).

7. Vorrichtung nach einem der Ansprüche 1 bis 6, dadurch gekennzeichnet, daß im Saugrohr (20, 21) ein Drosselorgan (65) angeordnet ist, das über ein nach oben geführtes Betätigungselement (66) betätigbar ist.

8. Vorrichtung nach Anspruch 3, dadurch gekennzeichnet, daß sich das Wasserzuführrohr (72f) nach oben über das Niveau (11f) im Becken (10f) hinauserstreckt, das obere Ende als Drehlager (210) für das radial innere Ende einer Räumerbrücke (211) ausgebildet ist, die sich am anderen Ende auf dem Beckenrand (212) abstützt, und das Wasserzuführrohr (72f) unterhalb des Niveaus (11f) mindestens einen radialen Durchbruch (218) aufweist.

## Claims

1. A device for removing bottom sludge and/or floating sludge from a circular settling basin (10) comprising a supporting construction (19) which with the aid of a driving means (18) is put into rotation, a sludge return line (29) which extends below said settling basin and is led into the latter in the mid-portion thereof for leading the sludge outside said settling basin, and clearing means (23, 24) connected to said supporting construction and including at least one pipe (20, 21) or suchlike arranged on said supporting construction and adapted to receive the slurry from said clearing means, said pipe being connected to said return line below the water level (11) of said settling basin via a revolving joint (27, 28) allowing a relative rotation for carrying the slurry to the entry end of said slurry return line (29), characterized in that in the middle of said settling basin (10) a vessel (27) is arranged being open above and receiving the end of said pipe (20, 21), that a cupular cover (28) is put on said vessel (27), that said end of said pipe is led through the top surface of said cover (28) and is tightly and permananetly connected with said cover so that said cover (28) substantially does not contact said vessel (27) and that an insulating air cushion (32) is arranged within the space provided between said cover (28) and said vessel (27).

2. The device according to claim 1, characterized in that a separate air inlet line (35) is led into said vessel (27), preferably through the bottom of said settling basin (10).

3. The device according to claim 1 or 2, characterized in that said vessel (27a, 27b, 27c, 27d, 27e) being arranged at the bottom of said basin and said cover (28a, 28b, 28c, 28d, 28e) are annularly shaped, thus providing an annular space including an insulating air cushion,said annular space surrounding a centric upright water supply pipe (72, 72b, 72c, 72d, 72e) which is connected to the water supply line (71, 71b, 71c, 71d, 71e) through the bottom (12a, 12b, 12c, 12d, 12e) of said basin.

4. The device according to claim 3, characterized in that said water supply pipe (72) is led through said annular cover (28a) while being separated therefrom.

5. The device according to claim 3, characterized in that said water supply pipe (72b, 72c, 72d, 72e) is connected to said cover (28b, 28c, 28d, 28e) but is radially spaced from the inside of the inside circumference of said annular vessel (27b, 27c, 27d, 27e).

6. The device according to any of the claims 1 to 5, characterized in that the suction pipe (20, 21) comprises a deairing (60), preferably, at a highest point of said suction pipe (20, 21).

7. The device according to any of the claims 1 to 6, characterized in that within said suction pipe (20, 21) a regulating means (65) is provided adapted to be actuated by means of an actuating element (66) directed upwardly.

8. The device according to claim 3, characterized in that said water supply pipe (72f) extends upwardly beyond the level (11f) of said basin (10f), the upper end is defined as a pivot bearing (210) for the radial inner end of a rotating scraper bridge (211) which at the other end is supported by the edge (212) of said basin, and that said water supply pipe (72f) comprises at least one radial opening (218) below said level (11f).

## Revendications

1. Dispositif pour éliminer de bassins de décantation circulaires (10) des bornes de fond et/ou des boues flottantes, comportant;
une structure porteuse (19) placée autour d'un axe central vertical, et qui est mise en rotation à l'aide d'un dispositif d'entraînement (18),
une conduite de retour pour la boue (29) qui passe en dessous du bassin de décantation et penêtre dans la partie centrale du bassin de décantation, et qui transporte la boue en dehors du bassin de décantation,
ainsi que des moyens de raclage (23, 24) comprenant au moins un tuyau (20, 21) ou équivalent fixé sur la structure porteuse, dans lequel les moyens de raclage envoient la boue et qui est relié, en-dessous du niveau d'eau (11) du bassin de décantation, à la conduite de retour par un joint tournant (27, 28) admettant une rotation relative, afin de transporter la boue à l'entrée de la conduite de retour (29),
caractérisé en ce qu'au centre du bassin de décantation (10) est placé un pot (27) ouvert vers le haut, dans lequel penêtre l'extrémité du tuyau (20, 21),
que par-dessus le pot (27) est placé un couvercle (28) en forme de coiffe,
que l'extrémité du tuyau passe à travers le toit du couvercle (28) et lui est lié de façon solidaire et étanche, de telle sorte que le couvercle (28) ne touche essentiellement pas le pot (27) et que dans l'espace entre le couvercle (28) et le pot (27) est disposé un coussin d'air (32).

2. Dispositif selon la revendication 1, caractérisé en ce qu'une conduite d'amenée d'air (35) séparée pénètre dans le pot (27), passant de préférence par du bassin de décantation (10).

3. Dispositif selon la revendication 1 ou 2, caractérisé en ce que le pot (27a, 27b, 27c, 27d, 27e) disposé sur le fond du bassin (12a, 12b, 12c, 12d, 12e) et le couvercle (28a, 28b, 28c, 28d, 28e) sont de forme annulaire, formant ainsi autour d'un coussin d'air un espace annulaire qui entoure un tuyau d'amenée d'eau (72, 72b, 72c, 72d, 72e) placé veticalement au centre, lequel tuyau est relié à travers le fond du bassin (12a, 12b, 12c, 12d, 12e) à la conduite d'amenée d'eau (71, 71b, 71c, 71d, 71e).

4. Dispositif selon la revendication 3, caractérisé en ce que le tuyau d'amenée d'eau (72) traverse le couvercle annulaire (28a) en étant séparée de celui ci.

5. Dispositif selon la revendication 3, caractérisé en ce que le tuyau d'amenée d'eau (72b, 72c, 72d, 72e) est relié au couvercle (28b, 28c, 28d, 28e), mais est écarté radialement par rapport à la face intérieure de la paroi intérieure du pot annulaire (27b, 27c, 27d, 27e)

6. Dispositif selon l'une des revendications 1 à 5, caractérisé en ce que le tuyau d'évacuation (20, 21) est muni d'une aération (60), disposée de préférence à un point haut du tuyau d'aspiration (20, 21).

7. Dispositif selon l'une des revendications 1 à 6, caractérisé en ce que dans le tuyau d'évacuation (20, 21) est placé un organe d'étranglement (65) que l'on commande par un élément de manoeuvre (66) dirigé vers le haut.

8. Dispositif selon la revendication 3, caractérisé en ce que le tuyau d'amenée d'eau (72f) s'étend vers le haut au-dessus du niveau d'eau (11f) du bassin (10f), que son extrémité supérieure est conçue comme palier de pivotement (210) pour l'extrémité radialement intérieure d'un pont racleur (211) qui s'appuie à l'autre extrémité sur le bord du bassin (212), et que le tuyau d'amenée d'eau (72f) comporte en-dessous du niveau (11f) au moins un perçage radial (218).
